# EUROPÄISCHE PATENTANMELDUNG

(11) **EP 3 654 594 A1**
(43) Veröffentlichungstag der Anmeldung: **20.05.2020**
(21) Anmeldenummer: 18206466.7
(22) Anmeldetag: 15.11.2018
(51) Int. Cl.: H04L 12/803

(54) **VERFAHREN ZUR DATENÜBERTRAGUNG, KOMMUNIKATIONSGERÄT, COMPUTERPROGRAMM UND COMPUTERLESBARES MEDIUM**

(71) Anmelder: Siemens Aktiengesellschaft, 80333 München (DE)
(72) Erfinder: Fischer, Thomas, 91058 Erlangen (DE); Höme, Stephan, 91126 Schwabach (DE); Jung, Konstantin, 90537 Feucht (DE); Kerschbaum, Sven, 90768 Fürth (DE); Volkmann, Frank, 90475 Nürnberg (DE)

(57) **Zusammenfassung**

Die Erfindung betrifft ein Verfahren zur Datenübertragung in einem Netzwerk (1) mit mehreren Netzwerkknoten (B1-B6), bei dem eine Reservierungsanfrage mit einer geforderten Bandbreite für einen Stream (4), über den Datenframes zwischen einem Stream-Initiator (2) an einem Stream-Teilnehmer (3) übertragen werden sollen, gestellt und ein den Stream-Initiator (2) und den Stream-Teilnehmer (3) verbindender Pfad, dessen Netzwerkknoten (B1-B6) die Bandbreite gemäß der Reservierungsanfrage ermöglicht bzw. ermöglichen, gesucht wird, (B1-B6), wobei für den Fall, dass kein solcher Pfad im Netzwerk (1) gefunden werden kann, wenigstens zwei Unterpfade (UP1, UP2) gesucht werden, die jeweils den Stream-Initiator (2) und den Stream-Teilnehmer (3) verbinden und die sich jeweils um wenigstens einen Netzwerkknoten (B1-B6) voneinander unterscheiden und deren Netzwerkknoten (B1-B6) jeweils eine gegenüber der geforderten Bandbreite reduzierte Bandbreite ermöglicht bzw. ermöglichen, wobei die reduzierten Bandbreiten der Unterpfade (UP1, UP2) zusammengenommen die geforderte Bandbreite ermöglichen, und auf jedem Unterpfad (UP1, UP1) ein Unterstream (US1, US2) mit der jeweiligen reduzierten Bandbreite eingerichtet wird. Darüber hinaus betrifft die Erfindung ein Kommunikationsgerät, ein Computerprogramm und ein computerlesbares Medium.

## Beschreibung

Die Erfindung betrifft ein Verfahren zur Datenübertragung in einem insbesondere industriellen Netzwerk mit mehreren Netzwerkknoten, bei dem eine Reservierungsanfrage mit einer geforderten Bandbreite für einen Stream, über den Datenframes zwischen einem Stream-Initiator an einem Stream-Teilnehmer übertragen werden sollen, gestellt und ein den Stream-Initiator und den Stream-Teilnehmer verbindender Pfad, dessen Netzwerkknoten die Bandbreite gemäß der Reservierungsanfrage ermöglicht bzw. ermöglichen, gesucht wird. Darüber hinaus betrifft die Erfindung ein Kommunikationsgerät, ein Computerprogramm und ein computerlesbares Medium.

Time Sensitive Networking (TSN) bezeichnet eine Reihe von Standards, die den Bridging-Standard IEEE 802.1Q um Mechanismen zur Übertragung echtzeitkritischer Daten über Ethernet-Netze erweitern. Zu diesen Standards, die insbesondere geringe Latenz und hohe Verfügbarkeit ermöglichen, gehören beispielsweise die Zeitsynchronisation (IEEE 802.1AS-Rev), Frame Preemption (IEEE 802.1Qbu) und Reservierung (IEEE 802.1Qca, IEEE 802.1Qcc).

Mögliche Anwendungsbereiche von Time Sensitive Networking (TSN) liegen nach Auffassung der Anmelderin u.a. im Automobilbereich und im Bereich industrieller Anlagen. Bei letzteren vor alle, was die Datenaustausch zur Steuerung solcher Anlage angeht, etwa zwischen Feldgeräten in Form von Sensoren und/oder Aktoren sowie einer oder mehreren zugehörigen speicherprogrammierbaren Steuerungen (SPS).

Die Stream-Reservierung (vgl. die genannten Standards IEEE 802.1Qca sowie IEEE 802.1Qcc) im TSN ist der Mechanismus zur bandbreitengesicherten Übertragung echtzeitkritischer Daten (IEEE802 nennt Echtzeitflüsse "Streams"), etwa in einem Anlagennetz. Sie ermöglicht es Endgeräten, die für Streams erforderliche Dienstgüte (englisch: Quality of Service, abgekürzt QoS) im TSN-Netz zu reservieren, zum Beispiel Max Frame Size, Max Frame Count per Interval, Interval; beispielsweise 125 Byte/1/125 ps. Nach erfolgreicher Reservierung stellt das TSN-Netz sicher, dass die für einen Stream reservierte Bandbreite vom Quell- zum Zielgerät in allen beteiligten Netzwerkknoten, insbesondere Bridges, für die Dauer des Streams zur Verfügung steht. Hierzu muss der Kommunikationspfad für die Reservierung im Netz berechnet werden.

Die Pfadberechnung kann dabei einerseits über eine so genannten zentralisierte Netzwerkkonfiguration (englisch: Centralized Network Configuration, abgekürzt: CNC) erfolgen. Alternativ oder zusätzlich ist es auch möglich, die Pfadberechnung dezentral insbesondere mittels eines Reservierungsprotokolls, beispielsweise dem Multiple Stream Registration Protocol (abgekürzt: MSRP, siehe IEEE 802.1Qat) und/oder MSRP++ oder anderen Protokollen durchzuführen.

Die Reservierung bzw. der Reservierungsablauf erfolgt dabei vor der eigentlichen Datenübertragung. Beispielsweise wird von einem Sender (im Rahmen von TSN als "Talker" bezeichnet) als Stream-Initiator ein Stream insbesondere mit einem sogenannten "Talker Advertise" angekündigt und ein Empfänger (im Rahmen von TSN als "Listener" bezeichnet) kann sich als Stream-Teilnehmer an dem Stream anmelden bzw. diesen "attachen". Dann erfolgt die Pfadberechnung und die eigentliche Reservierungsanfrage. Im zentralen Modell erfolgt die Pfadberechnung in der Regel einer zentralen Netzwerk-Konfigurations-Einheit (englisch: Central Network Configuration, abgekürzt CNC), wohingegen im dezentralen Modell die Knoten "befragt" werden. Nach erfolgreicher Reservierung von Netzwerkressourcen an sämtlichen Netzwerkknoten auf einem den Talker und Listener verbindenden Pfad kann die Datenübertragung mit garantierter Dienstgüte/QoS erfolgen.

Dabei besteht die Möglichkeit, dass auf eine Reservierungsanfrage mit einer geforderten Dienstgüte für einen Stream hin in einem gegebenen Netzwerk kein Pfad mit ausreichenden Ressourcen, insbesondere einer ausreichenden Bandbreite gefunden werden kann. Der Anmelderin ist bekannt, dass dann bisher eine Ablehnung der Stream-Reservierungsanfrage erfolgt und der Stream kann nicht aufgebaut werden kann. Konkret lehnt das TSN-Netz Reservierungsanfragen ab, wenn die QoS-Anforderungen an das Netz, die insbesondere in der Stream-Ankündigung, etwa einem Talker Advertise, definiert sind, nicht erfüllt werden können. Dies ist immer dann der Fall, wenn es im Netz keinen Pfad von dem Stream-Initiator zu dem Stream-Teilnehmer gibt, auf dem der bzw. jeder Knotenpunkt die gewünschte Dienstgüteanforderung der Stream-Reservierungsanfrage erfüllen kann. Will beispielsweise eine Applikation einen Stream mit 10K pro 3 ms Netto-Daten reservieren, kann jedoch das Netzwerk auf keinem Pfad diese Anforderungen erfüllen, lehnt das Netzwerk die Reservierungsanfrage ab und eine anschließende Datenübertragung kann nicht stattfinden.

Dies stellt ein nicht unbeachtliches Problem dar, da die Daten, die über einen angekündigten, jedoch mangels Vorhandensein eines Pfades mit ausreichenden Ressourcen abgelehnten Stream übertragen werden sollten, benötigt werden und zwar mit der geforderten QoS. Dies gilt insbesondere im industriellen Umfeld, wo bezüglich diverser Daten, insbesondere Steuerdaten, auf eine Echtzeit-Übertragung mit definierter QoS nicht verzichtet werden kann. Schlägt eine Reservierungsanfrage fehl, funktionieren Applikationen, welche eine solche gestellt haben, nicht mehr. Es kann beispielsweise dazu kommen, dass ein Hochlauf/Start in einer industriellen Anlage mit entsprechendem Fehler abbricht, was zu Ausfallzeiten führen und Kosten verursachen kann.

Es ist daher eine Aufgabe der vorliegenden Erfindung, ein Verfahren der eingangsgenannten Art derart weiterzuentwickeln, dass eine Datenübertragung mit einer gewünschten Dienstgüte bzw. Bandbreite auch in dem Falle möglich ist, dass kein Pfad im Netzwerk gefunden werden kann, auf dem jeder Knotenpunkt die gewünschte Anforderung erfüllt.

Diese Aufgabe wird bei einem Verfahren der eingangs genannten Art dadurch gelöst, dass für den Fall, dass kein solcher Pfad im Netzwerk gefunden werden kann, wenigstens zwei Unterpfade gesucht werden, die jeweils den Stream-Initiator und den Stream-Teilnehmer verbinden und die sich jeweils um wenigstens einen Netzwerkknoten voneinander unterscheiden und deren Netzwerkknoten jeweils eine gegenüber der geforderten Bandbreite reduzierte Bandbreite ermöglicht bzw. ermöglichen, wobei die reduzierten Bandbreiten der Unterpfade zusammengenommen die geforderte Bandbreite ermöglichen, und auf jedem Unterpfad ein Unterstream mit der jeweiligen reduzierten Bandbreite eingerichtet wird.

Darüber hinaus wird die Aufgabe gelöst durch ein Kommunikationsgerät, das zur Durchführung des erfindungsgemäßen Verfahrens ausgebildet und/oder eingerichtet ist.

Der vorliegenden Erfindung liegt mit anderen Worten die Idee zugrunde, für den Fall, dass auf eine Stream-Reservierungsanfrage hin in einem Netzwerk kein (einzelner) Pfad gefunden werden kann, auf welchem die die mit der Reservierung geforderte Bandbreite zur Verfügung steht, nicht, wie bisher gemäß dem Stand der Technik vorgesehen, die Anfrage abgelehnt wird, sondern diese auf mehrere Unterstreams auf mehreren unterschiedlichen den Stream-Initiator und (jeweiligen) Stream-Teilnehmer verbindenden Unterpfaden aufzuteilen. So wird es möglich, dass eine Stream-Reservierungsanfrage, die gemäß dem Stand der Technik abgelehnt würde, doch noch positiv beantwortet werden kann. Es kann insbesondere gewährleistet werden, dass eine Applikation, die über einen entsprechenden Stream Daten übertragen möchte, auch bei Fehlen eines Pfades mit ausreichenden Ressourcen funktioniert. Ausfälle können zuverlässig vermieden werden. Insbesondere, da zwei oder mehr Unterpfade kombiniert werden können, bietet die Erfindung eine gegenüber dem Stand der Technik deutlich bessere Ausnutzung vorhandener Netzwerkressourcen.

Selbstverständlich ist es möglich, dass eine Reservierungsanfrage mit einer geforderten Bandbreite für einen Stream gestellt wird, über den Datenframes zwischen einem Stream-Initiator und mehreren Stream-Teilnehmern übertragen werden sollen. Dann wird bevorzugt nacheinander für jeden Stream-Teilnehmer ein den Stream-Initiator und jeweiligen Stream-Teilnehmer verbindender Pfad, dessen Netzwerkknoten die Bandbreite gemäß der Reservierungsanfrage ermöglicht bzw. ermöglichen, gesucht, und für den Fall, dass für einen oder mehrere Stream-Teilnehmer kein solcher Pfad im Netzwerk gefunden werden kann, werden für den oder jeden betroffenen Stream-Teilnehmer jeweils wenigstens zwei Unterpfade gesucht, die den Stream-Initiator und den jeweiligen Stream-Teilnehmer verbinden und die sich jeweils um wenigstens einen Netzwerkknoten voneinander unterscheiden und deren Netzwerkknoten jeweils eine gegenüber der geforderten Bandbreite reduzierte Bandbreite ermöglicht bzw. ermöglichen, wobei die reduzierten Bandbreiten der Unterpfade zusammengenommen die geforderte Bandbreite ermöglichen, und auf jedem Unterpfad ein Unterstream mit der jeweiligen reduzierten Bandbreite eingerichtet wird.

Unter betroffenen Stream-Teilnehmern sind dabei solche zu verstehen, für die kein Pfad zum Stream-Initiator gefunden werden kann, auf welchem der oder - im Falle mehrerer - alle Netzwerkknoten die Bandbreite erfüllt bzw. erfüllen.

Dass ein Netzwerkknoten eine geforderte bzw. reduzierte Bandbreite ermöglicht, bedeutet insbesondere, dass die geforderte bzw. reduzierte Bandbreite an dem Knoten insbesondere für die Dauer des Streams bzw. Unterstreams zur Verfügung steht und somit reserviert werden kann.

Sofern mehrere Netzwerkknoten auf einem Unterpfad liegen, ist insbesondere die von dem "schwächsten" Netzwerkknoten erfüllbare Bandbreite zu betrachten, welche in der Regel nach dem Prinzip des "schwächsten Gliedes in der Kette" die erfüllbare Bandbreite des gesamten Unterpfades definieren bzw. begrenzen wird. Dass die zwei oder mehr Unterpfade zusammengenommen bzw. in Summe die Bandbreite gemäß der Reservierungsanfrage erfüllen bzw. ermöglichen, bedeutet insbesondere, dass die jeweils "schwächsten" Netzwerkknoten der Unterpfade zusammengenommen bzw. in Summe die Bandbreite gemäß der Reservierungsanfrage erfüllen bzw. ermöglichen.

Dass genau ein Talker an genau einen Listener Daten über den Stream senden will, ist praktisch der einfachste Fall. Bereits durch AVB wurde "Multiple Listeners per Talker" eingeführt, um die Anzahl von Echtzeitflüssen von einer Quelle, also einem Talker, zu mehreren Zielen, also Listenern, auf einen einzigen Stream zu reduzieren. So wurde die Datenübertragung in einem 1:n Szenario mit nur einem Stream möglich. Die ebenfalls auf die Anmelderin zurückgehende europäische Patentanmeldung Nr. EP 18 15 4319 beschreibt einen Mechanismus, der für ein Szenario mit mehreren Talkern, die Datenframes an genau einen Listener senden (wollen), die Anzahl von Streams auf einen einzigen Stream reduziert. Selbstverständlich kann auch in einem solchen Szenario auf die erfindungsgemäße Weise verfahren werden und für den Fall, dass für einen oder auch mehrere der Talker, die an den einen Listener Daten senden wollen, kein die geforderte Bandbreite abdeckender Pfad gefunden werden kann, der angefragte Stream für den bzw. jeden betroffenen Talker auf zwei oder mehr Unterpfade und Unterstreams aufgeteilt wird.

Bevorzugt handelt es sich bei dem Stream, für den die Reservierungsanfrage gestellt wird, um einen applikativen Stream. Die Reservierungsanfrage wird insbesondere von einer Applikation, bevorzugt einer auf dem Stream-Initiator und/oder einer auf dem oder den Stream-Teilnehmern vorgesehenen bzw. laufenden Applikation erstellt bzw. herausgegeben. Bei der Applikation kann es sich beispielsweise um OPC UA handeln.

OPC UA (OPC Unified Architecture) ist ein industrielles Standardprotokoll der OPC Foundation zur hersteller-unabhängigen Kommunikation insbesondere für den Austausch von Maschinendaten in der Prozessautomatisierung. Von der OPC Foundation (https://opcfoundation.org/) ist eine mehrteilige Spezifikation zu OPC Unified Architecture veröffentlicht worden (https://opcfoundation.org/developer-tools/specificationsunified-architecture/).

OPC UA ist auch in Kapitel 4 des vom DIN Institut für Normung e.V. herausgegebenen Buches "Industrie 4.0 - Industrielle Kommunikation - Basistechnologie für die Digitalisierung der Industrie" von Markus Weinländer, 2017, VDE Verlag, ISBN 978-3-8007-4262-2 (VDE Verlag) behandelt.

OPC UA PubSub (Publish/Subscribe) ist eine Erweiterung des bisherigen Client/Server-basierten Ansatzes von OPC UA, welcher unter anderem eine Integration einfacher (Feld-)Geräte an eine Cloud und auch die Kommunikation zwischen einfachen Feldgeräten und zwischen Steuerungen und auch die direkte Kommunikation zwischen Feldgeräten untereinander bzw. Steuerungen untereinander usw. ermöglicht. Die PubSub-Erweiterung ist in Teil 14 der Spezifikation näher erläutert (OPC Foundation: OPC Unified Architecture, Part 14: PubSub, Release 1.04, 6. Februar 2018, https://opcfoundation.org/developertools/specifications-unified-architecture/part-14-pubsub/).

Weiterhin bevorzugt ist vorgesehen, dass die Reservierungsanfrage und/oder der insbesondere applikative Stream, für den die Reservierungsanfrage gestellt wird, bevorzugt die zu diesem gehörigen Datenframes, auf die Unterstreams aufgeteilt wird bzw. werden.

Eine Reservierungsanfrage wird in der Regel unter Nutzung eines Reservierungsprotokolls gestellt. Dabei können verschiedene insbesondere vorbekannte Protokolle, beispielsweise MSRP oder MSRP++ verwendet werden.

Unter der Aufteilung einer Reservierungsanfrage ist insbesondere zu verstehen, dass eine etwa von einer Applikation stammende (einzelne) Reservierungsanfrage mit einer bestimmten Anforderung, insbesondere einer bestimmten geforderten Bandbreite in zwei oder mehr Reservierungsanfragen mit jeweils gegenüber der geforderten Anforderung, insbesondere Bandbreite reduzierten Anforderung, insbesondere Bandbreiten aufgeteilt wird. Aus einer Reservierungsanfrage werden insbesondere zwei oder mehr Unter-Reservierungsanfragen mit geringerer Anforderung, insbesondere Bandbreite generiert.

Es kann ein in der IEEE definiertes User Network Interface (abgekürzt UNI, siehe beispielsweise http://www.ieee802.org/1/files/public/docs2016/new-goetz-UNI-MSRPv2-0216-v01.pdf) zum Einsatz kommen bzw. verwendet werden, welches eine einheitliche Schnittstelle bildet. Eine Applikation bzw. Applikationen kriegen dann bevorzugt nicht mehr mit, ob ein zentraler Controller, insbesondere CNC verwendet wird, oder das Netzwerk selber eine Reservierungsanfrage abwickelt bzw. bearbeitet.

An dem oder jedem Netzwerkknoten der Unterpfade werden bevorzugt Netzwerkressourcen, insbesondere Bandbreite für die Unterstreams reserviert, dies insbesondere im Rahmen der Einrichtung der Unterstreams und/oder gemäß der reduzierten Bandbreite des jeweiligen Unterstreams.

Der oder die Netzwerkknoten können beispielsweise in Form von Bridges und/oder Switches vorliegen. Zweckmäßiger Weise sind sämtliche Netzwerkknoten in dem Netzwerk AVB- oder TSN-fähig, unterstützen insbesondere Echtzeitflüsse, also Streams (insbesondere im Sinne von IEEE802) mit gesicherten, reservierten Ressourcen und insbesondere definierter Latenz.

Kann beispielsweise auf eine Reservierungsanfrage für einen Stream, mit dem 10K pro 3 ms Netto-Daten übertragen werden sollen, kein (einzelner) Pfad gefunden werden, auf dem an dem bzw. allen Netzwerkknoten 10K pro 3 ms Netto-Daten zur Verfügung stehen, also reserviert werden können, wird erfindungsgemäß überprüft, ob eine Konstellation mit zwei oder mehr Unterpfaden gefunden werden kann, die zusammengenommen die geforderte Bandbreite erfüllen. Für das genannte Beispiel könnte beispielsweise ein erster Unterpfad gefunden werden, auf dem der oder alle Knoten 7K pro 3 ms ermöglichen, also abdecken können, und ein zweiter Unterpfad, auf dem der oder alle Knoten 3K pro 3 ms ermöglichen, also abdecken können. Beide Unterpfade zusammen können dann die Anforderung von 10 K pro 3 ms erfüllen.

Es ist möglich, dass die Such nach dem (einen) Pfad auf dem der oder sämtliche Netzwerkknoten die geforderte Bandbreite gewährleisten können, und/oder die Suche nach Unterpfaden von einer zentralen Netzwerk-Konfigurations-Einheit (englisch: Central Network Configuration, CNC) und/oder einer zentralen Benutzer-Konfigurations-Einheit (englisch: Centralized User Configuration, CUC) durchgeführt wird.

Alternativ oder zusätzlich ist es möglich, dass die Suche nach dem (einen) Pfad und/oder nach Unterpfaden mittels eines Reservierungsprotokolls, beispielsweise MSRP oder MSRP++ oder anderen, durchgeführt wird. MSRP steht dabei für Multiple Stream Registration Protocol (vgl. insbesondere IEEE802.Q).

Das Aushandeln, wie ein insbesondere applikativer Stream auf mehrere Netzwerk-Streams verteilt werden kann, kann prinzipiell auf unterschiedlichen Wegen erfolgen. In einem besonders einfachen Fall ist dies durch "intelligentes Probieren" möglich. Dann kann beispielsweise eine schrittweise Reduzierung der Anforderungen gemäß der insbesondere von einer Applikation gestellten Reservierungsanfrage erfolgen.

Entsprechend zeichnet sich eine weitere Ausführungsform des erfindungsgemäßen Verfahrens dadurch aus, dass für das Auffinden der wenigstens zwei Unterpfade die geforderte Bandbreite in vorgegebenen Schritten reduziert und nach jedem Schritt ein erster Unterpfad gesucht wird, der die resultierend reduzierte Bandbreite erfüllt, und für den Fall, dass auf diese Weise ein erster Unterpfad gefunden wurde, genau ein weiterer Unterpfad gesucht wird, der die verbleibende Bandbreite, um die reduziert wurde, erfüllt oder mehrere weitere Unterpfade gesucht werden, die die verbleibende Bandbreite, um die reduziert wurde, zusammengenommen erfüllen.

In einem rein beispielhalft zu verstehenden Szenario kann insbesondere eine Applikation einen Stream mit 10K pro 3ms Netto-Daten reservieren wollen. Wenn die Suche nach einem diese Anforderungen erfüllenden (einzelnen) Netzwerkpfad erfolglos ist, wird die Reservierungsanfrage aufgrund ungenügender Netzwerkressourcen abgelehnt. In einem nächsten Schritt kann dann beispielsweise zunächst versucht werden, 8K pro 3ms Netto-Daten zu reservieren. Kann auch kein entsprechender Unterpfad mit einer derart reduzierten Dienstgüteanforderung gefunden werden, lehnt insbesondere das Netzwerk, bzw. eine zentrale Stelle, die Anfrage weiterhin ab. Dann kann in einem nächsten Schritt beispielsweise versucht werden 7K pro 3ms Netto-Daten zu reservieren und für den Fall, dass ein Unterpfad gefunden werden kann, der diese Bandbreite (noch) bietet, führt das Netzwerk die Reservierung für den ersten Unterstream auf diesem Unterpfad durch. Es verbleiben dann entsprechend noch 3K pro 3ms Netto-Daten. In einem nächsten Schritt wird nach einem zweiten Unterpfad gesucht, welcher diese "Restanforderung" abdecken kann. Wird ein solcher gefunden wird auf diesem eine Reservierung für den entsprechenden zweiten Unterstream durchgeführt. Die Datenframes, die eigentlich über einen Stream mit 10K pro 3ms übertragen werden sollten, werden dann auf die beiden Unterstreams auf den beiden Unterpfaden entsprechend verteilt. Es sei angemerkt, dass für den Fall, dass kein zweiter Unterpfad für die "Restanforderung" gefunden werden kann, diese selbstverständlich nochmals auf zwei oder auch mehr weitere Unterpfade verteilt werden kann.

Eine weitere Möglichkeit besteht darin, dass ein zentraler Netzwerkkonfigurator bzw. Netzwerkkontroller und/oder ein Reservierungsprotokoll (z.B. MSRP,...) mögliche Unterstream-Kombinationen zur Erfüllung der Stream-Anforderungen gemäß der Reservierungsanfrage liefern. Diese Möglichkeit ist effizienter, da das Probieren entfällt, muss jedoch durch das gegebene Netzwerk unterstützt werden. Von Unterstream-Kombinationen, die von einem zentralen Netzwerkkontroller und/oder einem Reservierungsprotokoll angeboten werden, kann dann eine Kombination ausgewählt werden und eine Reservierung für diese erfolgen.

Auch kann vorgesehen sein, dass der Stream, für den die Reservierungsanfrage gestellt wird, in an sich bekannter Weise von dem Stream-Initiator angekündigt wird, und sich der oder jeder Stream-Teilnehmer in Reaktion auf die Ankündigung an dem Stream anmeldet und die Suche nach einem Pfad zwischen dem Stream-Teilnehmer und dem oder dem jeweiligen Stream-Teilnehmer, dessen Netzwerkkonten die Bandbreite gemäß der Reservierungsanfrage erfüllt bzw. erfüllen, jeweils im Anschluss an die Anmeldung des oder des jeweiligen Stream-Teilnehmers erfolgt.

Üblicherweise teilt ein Stream-Initiator dem Netzwerk, insbesondere TSN-Netzwerk die Eigenschaften eines von ihm angekündigten Streams mit. Dies kann insbesondere durch einen sogenannten "Talker Advertise" erfolgen, der bevorzugt im Netzwerk verteilt wird. In diesem Schritt findet üblicherweise noch keine Reservierung an bzw. von Netzwerkknoten statt. Vielmehr erfolgt die eigentliche Reservierung von Netzwerkressourcen an Knotenpunkten erst mit einem Stream-Teilnehmer, beispielsweise Listener, der den angekündigten Stream anfragt bzw. sich an diesem anmeldet, was beispielsweise durch eine "Listener Join" möglich ist. In der Regel werden auch erst zu diesem Zeitpunkt der bzw. die möglichen Netzwerkpfade vom Stream-Initiator zum Stream-Teilnehmer geprüft.

In besonders bevorzugter Weiterbildung des erfindungsgemäßen Verfahrens ist darüber hinaus vorgesehen, dass für den Stream-Initiator eine Adaptionsschicht, insbesondere zwischen einer Applikation und einem TSN-Stack des Stream-Initiators, vorgesehen ist, und für den oder jeden Stream-Teilnehmer eine Adaptionsschicht, insbesondere zwischen einer Applikation und einem TSN-Stack des Stream-Teilnehmers, vorgesehen ist, und die Adaptionsschicht des Stream-Initiators oder des oder jeden betroffenen Stream-Teilnehmers die Reservierungsanfrage für den Stream auf wenigstens zwei Unter-Reservierungsanfragen für die wenigstens zwei Unterpfade aufteilt.

Ist eine Adaptionsschicht auf Seiten des Stream-Initiators und/oder auf Seiten des bzw. der Stream-Teilnehmer vorgesehen und erfolgt die Suche nach zwei oder mehr geeigneten Unterpfaden durch "intelligentes Probieren", wird dies bevorzugt von der Adaptionsschicht bzw. Adaptionsschichten insbesondere des bzw. der Listener durchgeführt.

Die Adaptionsschicht des Stream-Initiators kann Datenframes, die über den Stream, für welchen die Reservierungsanfrage gestellt wird, übertragen werden sollen, auf die wenigstens zwei Unterstreams verteilen, und die Adaptionsschicht des oder jeden betroffenen Stream-Teilnehmers kann die auf die wenigstens zwei Unterstreams verteilten Datenframes wieder zusammenführen, insbesondere in einem Stream. Dies ist zweckmäßiger Weise der Fall, wenn der Stream-Initiator ein Talker und der oder die Stream-Teilnehmer Listener sind.

Alternativ dazu kann vorgesehen sein, dass die Adaptionsschicht des oder jeden betroffenen Stream-Teilnehmers Datenframes, die über den Stream, für welchen die Reservierungsanfrage gestellt wird, übertragen werden sollen, auf die wenigstens zwei Unterstreams verteilt, und die Adaptionsschicht des Stream-Initiators die auf die wenigstens zwei Unterstreams verteilten Datenframes wieder zusammenführt, insbesondere in einem Stream. Dies ist insbesondere der Fall, wenn der Stream-Initiator ein Listener und der oder die Stream-Teilnehmer Talker sind.

Das erfindungsgemäße Kommunikationsgerät zeichnet sich in bevorzugter Ausgestaltung entsprechend dadurch aus, dass eine Adaptionsschicht, insbesondere zwischen einer Applikation und einem TSN-Stack des Kommunikationsgerätes, aufweist, und die Adaptionsschicht ausgebildet und/oder eingerichtet ist, um die Reservierungsanfrage für den Stream auf wenigstens zwei Unter-Reservierungsanfragen für die wenigstens zwei Unterpfade aufzuteilen.

Das erfindungsgemäße Kommunikationsgerät kann sich weiterhin dadurch auszeichnen, dass die Adaptionsschicht ausgebildet und/oder eingerichtet ist, um Datenframes, die über den Stream, für welchen die Reservierungsanfrage gestellt wird, übertragen werden sollen, auf die wenigstens zwei Unterstreams zu verteilen, und/oder um die auf die zusammenzuführen, insbesondere in einen Stream.

Die Adaptionsschicht kann beispielsweise Software-implementiert sein. In bestehenden Geräten kann eine Adaptionsschicht zum Beispiel über eine Software- und/oder Firmware Update bzw. Upgrade nachträglich vorgesehen bzw. eingerichtet werden.

Zweckmäßigerweise können die Adaptionsschicht auf Seiten des Talkers und die Adaptionsschicht auf Seiten des Listeners zur Bewerkstelligung der Verteilung eines insbesondere applikativen Streams auf mehrere Unterstreams miteinander kommunizieren, um sich den Status der Reservierungsanfrage mitzuteilen.

Gemäß der vorgenannten besonders vorteilhaften Ausführungsformen ist eine Adaptionsschicht, die die eigentliche Stream-Reservierungsanfrage stellt, insbesondere zwischen einer den Stream anfragenden Applikation (etwa OPC UA) und dem Netzwerk geschaltet. Ist eine Adaptionsschicht vorgesehen, kann diese eine Stream-Reservierungsanfrage einer Applikation auf mehrere Unterstream-Reservierungsanfragen zerlegen, wenn die klassische Anfrage, im Rahmen derer nur nach einem einzelnen Pfad gesucht wird, fehlschlägt. Hierfür "handelt" die Adaptionsschicht bevorzugt mit dem Netz die notwendigen Unterstreams aus, um die ursprüngliche Reservierungsanforderung abzudecken und reserviert diese auch im Netz, konkret an den beteiligten Netzwerkkonten auf den zwei oder mehr Unterpfaden.

Der Informationsaustausch (zum "Aushandeln" von zwei oder mehr Unterstreams) kann entweder applikativ erfolgen, beispielsweise zwischen den Adaptionsschichten einerseits auf Seiten des Talkers und andererseits auf Seiten des Listeners, oder auch über eine bevorzugt standardisierte Erweiterung des Reservierungsprotokolls und/oder zentralen Reservierungsmechanismen, insbesondere in einem zentralen Netzwerkkontroller.

Für den Fall, dass eine insbesondere applikative Reservierungsanfrage auf mehrere Unterstreams aufgeteilt wird, wird die Adaptionsschicht auf Seiten des Talkers bevorzugt die einzelnen Datenframes bzw. Pakete insbesondere der Applikation auf die verschiedenen tatsächlichen Unterstreams im Netz verteilen. Neben der reinen Verteilung der Netto-Daten auf mehrere Unterstreams stellt die Adaptionsschicht insbesondere des bzw. der Talker bevorzugt auch die Erfüllung der applikativen QoS-Anforderungen, etwa der maximalen Latenz, sicher. Dabei berücksichtigt sie neben der Latenz der Unterstreams bevorzugt auch die durch sie selbst, also die Adaptionsschicht verursachten Verzögerungen. Die Adaptionsschicht auf Seiten des oder der Listener fügt bevorzugt die Datenframes bzw. Pakete der zusammengehörenden Unterstreams zu einem, für die Applikation auf Seiten des Listeners einzelnen logischen Stream zusammen.

Eine weitere Ausführungsform des erfindungsgemäßen Verfahrens zeichnet sich entsprechend dadurch aus, dass eine Verzögerung, die durch das Aufteilen der Reservierungsanfrage auf mehrere Unter-Reservierungsanfragen und/oder eine Verzögerung, die durch das Aufteilen von Datenframes auf die Unterstreams bedingt ist, und/oder eine Verzögerung, die durch das Zusammenführen von Datenframes aus Unterstreams bedingt ist, bei der Einhaltung einer gemäß der Reservierungsanfrage maximalen Latenz berücksichtigt wird.

Weiterhin bevorzugt ist vorgesehen, dass auf jedem der zwei oder mehr Unterpfaden eine maximale Latenz, die insbesondere in der Reservierungsanfrage definiert ist bzw. mit dieser angegeben wird, eingehalten wird. Insbesondere werden auf den zwei oder mehr Unterpfaden Unterstreams eingerichtet, die alle die gleiche maximale Latenz insbesondere gemäß der Reservierungsanfrage einhalten.

Alternativ oder zusätzlich kann vorgesehen sein, dass eine Verzögerung, die durch das Suchen von Unterpfaden bedingt wird, bei der Einhaltung einer gemäß der Reservierungsanfrage maximalen Latenz berücksichtigt wird.

Das Vorhandensein einer Adaptionsschicht bei dem bzw. für den Stream-Initiator und den oder die Stream-Teilnehmer bietet den großen Vorteil, dass diese für die Applikation bzw. Applikationen transparent ist. Das heißt, Applikationen müssen nicht angepasst werden. Die Adaptionsschicht(en) verstecken die Unterpfade und Unterstreams, also die eigentlich bzw. tatsächlich im Netzwerk eingerichteten Streams, vor der bzw. den Applikationen.

Ein weiterer Gegenstand der Erfindung ist ein Computerprogramm, das Programmcodemittel zur Durchführung der Schritte des erfindungsgemäßen Verfahrens zur Datenübertragung umfasst.

Schließlich ist Gegenstand der Erfindung ein computerlesbares Medium, das Instruktionen umfasst, die, wenn sie auf wenigstens einem Computer ausgeführt werden, den wenigstens einen Computer veranlassen, die Schritte des erfindungsgemäßen Verfahrens zur Datenübertragung durchzuführen.

Bei dem computerlesbaren Medium kann es sich beispielsweise um eine CD-ROM oder DVD oder einen USB oder Flash Speicher handeln. Es sei angemerkt, dass unter einem computerlesbaren Medium nicht ausschließlich ein körperliches Medium zu verstehen sein soll, sondern ein solches beispielswiese auch in Form eines Datenstromes und/oder eines Signals, welches einen Datenstrom repräsentiert, vorliegen kann.

Weitere Merkmale und Vorteile der vorliegenden Erfindung werden anhand der nachfolgenden Beschreibung erfindungsgemäßer Ausführungsformen unter Bezugnahme auf die beiliegende Zeichnung deutlich. Darin ist
- FIG 1: eine rein schematische Teildarstellung eines industriellen TSN-Netzwerkes, in dem eine Reservierungsanfrage für einen Stream zwischen einem Talker und einem Listener gestellt und aufgrund ungenügender Netzwerkressourcen auf einem Pfad abgelehnt wird;
- FIG 2: das Netzwerk aus FIG 1, wobei die Reservierungsanfrage aufgeteilt wird; und
- FIG 3: die Aufteilung der Reservierungsanfrage für den Fall eines zweiten Listeners.

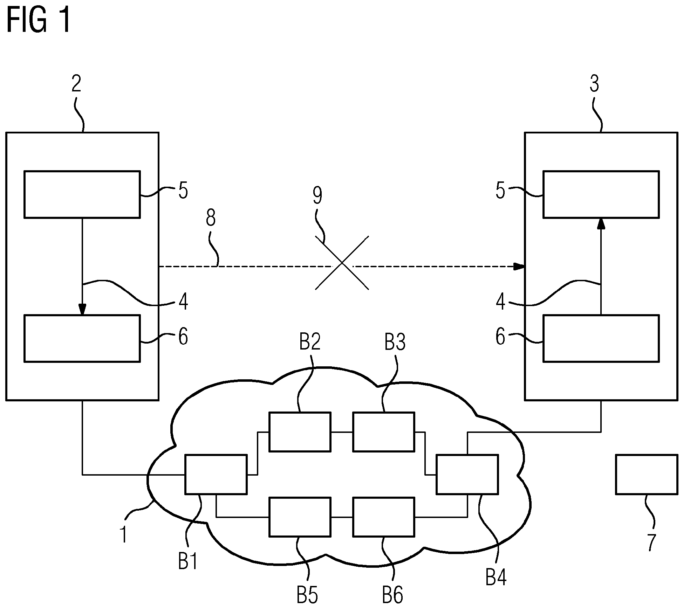

Die FIG 1 zeigt in rein schematischer Teildarstellung ein industrielles TSN-Netzwerk 1, welches in der Figur durch eine Wolke angedeutet ist. Das TSN-Netzwerk 1 umfasst in an sich bekannter Weise eine Vielzahl von Netzwerkknoten, vorliegend Bridges, von denen in der FIG 1 beispielhaft nur sechs Bridges B1 bis B6 gezeigt sind. Die Netzwerkknoten B1 bis B6 sind alle TSN-fähig.

An das TSN Netzwerk 1 sind in ebenfalls an sich bekannter Weise eine Vielzahl von Endgeräten angeschlossen, von denen in der FIG 1 - wiederum beispielhaft - zwei Geräte gezeigt sind, konkret ein Endgerät 2, welches einen Talker darstellt, sowie ein Endgerät 3, welches einen Listener bildet. Der Talker 2 ist, wie man erkennt, an die Bridge B1 angeschlossen und der Listener 3 an die Bridge B4.

Es soll eine Datenübertragung von dem Talker 2 zu dem Listener 3 über einen bzw. in Form eines applikativen Streams 4 erfolgen (in FIG 1 schematisch durch Pfeile angedeutet). Sowohl der Talker 2 als auch der Listener 3 umfassen jeweils eine Applikation 5, vorliegend OPC UA, und es soll ein Datenaustausch zwischen den Applikationen 5 erfolgen. Sowohl der Talker 2 als auch der Listener 3 umfassen des Weiteren jeweils einen TSN Stack 6. Der TSN Stack 6 kann verschiedene Protokolle insbesondere aus der IEEE-Standardisierung umfassen, wie zum Beispiel 802.1AS, 802.1QBv, 802.1QBv, 802.1QBu, 802.1Qc und/oder weitere, sowie Anbindung der Ethernet-NIC und Queue Management.

Die Stream-Reservierung (vgl. die Standards IEEE802.1 Qca sowie IEEE802.1 Qcc) im TSN-Netzwerk 1 ist der Mechanismus zur bandbreitengesicherten Übertragung echtzeitkritischer Daten (IEEE802 nennt Echtzeitflüsse "Streams"). Die Reservierung ermöglicht es den Endgeräten 2, 3 die für Streams 4 erforderliche Dienstgüte/QoS im TSN-Netzwerk 1 zu reservieren. Reserviert wird beispielsweise Bandbreite bzw. eine maximale Frame Size, ein maximaler Frame Count pro Intervall, ein Intervall; beispielsweise 125 Bit/1/125 ps. Nach einer erfolgreichen Reservierung stellt das TSN-Netzwerk 1 sicher, dass die für einen Stream 4 reservierte Bandbreite vom Quellgerät, also Talker 2 bis zum Zielgerät, also Listener 3 in allen beteiligten Netzwerkknoten B1-B6 für die Dauer des Streams 4 zur Verfügung steht. Hierzu muss der Kommunikationspfad für die Reservierung im Netzwerk 1 berechnet werden. Die Pfadberechnung kann beispielsweise über eine zentralisierte NetzwerkKonfiguration (englisch: Centralized Network Configuration, CNC) und/oder eine zentralisierte Nutzer-Konfiguration (englisch: Centralized User Configuration, CUC) erfolgen. In der FIG 1 sind die CNC und/oder CUC rein schematisch durch ein mit dem Bezugszeichen 7 versehendes Blockelement angedeutet. Alternativ oder zusätzlich zu dem zentralisierten Ansatz kann die Pfadberechnung auch dezentral, insbesondere mittels eines Reservierungsprotokolls, beispielsweise dem Multiple Stream Registration Protocol (MSRP, siehe IEEE802.1 Qat) oder anderen Protokollen durchzuführen.

Die Reservierung bzw. der Reservierungsablauf erfolgt vor der eigentlichen Übertragung von Daten, insbesondere Datenframes bzw. Paketen, von dem Talker 2 zu dem Listener 3. Dabei wird in aus dem Stand der Technik hinlänglich vorbekannter Weise von dem Talker 2 (vorliegend der Stream-Initiator) der Stream 4, etwa über einen sogenannten "Talker Advertise", angekündigt und beschrieben. Dies erfolgt konkret durch die Applikation 5 des Talkers 2. Die Beschreibung erfolgt bevorzugt über eine sogenannte "Traffic Specification" (T_{Spec}).

Der Listener 3 (Stream-Teilnehmer) kann sich an dem Stream 4 anmelden bzw. diesen "attachen". Dann findet eine Pfadberechnung - im zentralen Modell im CNC 7 - statt und der CNC 7 konfiguriert die Knoten B1 bis B6 (z.B. die Fowarding-Databases) entsprechend. Im dezentralen Modell wird die Reservierung mittels Protokollen durchgeführt. Ist eine Reservierung von den gemäß der Stream-Beschreibung erforderlichen Netzwerkressourcen an sämtlichen Netzwerkknoten B1 bis B6 auf einem den Talker 2 und den Listener 3 verbindenden Pfad erfolgreich, kann die Datenübertragung mit garantierter Dienstgüte/QoS beginnen.

Es besteht jedoch die Möglichkeit, dass auf eine Reservierungsanfrage mit einer geforderten Dienstgüte für einen Stream 4 hin in einem Netzwerk 1 kein Pfad mit ausreichenden Ressourcen, insbesondere ausreichender Bandbreite gefunden werden kann. Dann erfolgt gemäß dem Stand der Technik bisher eine Ablehnung der Stream-Reservierungsanfrage und der Stream 4 kann nicht aufgebaut werden. Konkret lehnt das TSN-Netzwerk 1 Reservierungsanfragen ab, wenn die Dienstgüte-/QoS-Anforderungen an das Netzwerk 1 nicht erfüllt werden können. Dies ist immer dann der Fall, wenn es im Netzwerk 2 keinen Pfad von dem Talker 2 zu dem Listener gibt, auf dem der bzw. jeder Knotenpunkt B1 bis B6 die Bandbreite gemäß der Stream-Reservierungsanfrage erfüllen kann. Will beispielsweise eine Applikation 5 einen Stream 4 mit 10K pro 3ms Netto-Daten reservieren, kann jedoch das Netzwerk 1 auf keinem Pfad diese Anforderungen erfüllen, lehnt das Netzwerk 1 die Reservierungsanfrage ab und eine anschließende Datenübertragung kann nicht stattfinden.

In der FIG 1 ist eine entsprechende Ablehnung durch einen gestrichelten Pfeil 8, der mit einem Kreuz 9 durchgestrichen ist, angedeutet.

Eine Ablehnung von Reservierungsanfragen stellt ein nicht unbeachtliches Problem in TSN-Netzwerken 1 dar, da die Daten, die über einen angekündigten, jedoch mangels Vorhandenseins eines Pfades mit ausreichenden Ressourcen abgelehnten Stream übertragen werden sollen, in der Regel benötigt werden, dies rechtzeitig.

Gemäß der vorliegenden Erfindung wird dieser Problematik damit begegnet, dass für den Fall, dass kein (einzelner) Pfad mit ausreichenden Ressourcen im Netzwerk 1 gefunden werden kann, nicht wie bisher gemäß dem Stand der Technik die Anfrage abgelehnt wird, sondern diese auf mehrere Unterstreams US1, US2 auf mehreren unterschiedlichen, jeweils den Talker 2 und Listener 3 verbindenden Unterpfaden UP1, UP2 aufgeteilt und für den Listener 3 wieder zusammengeführt wird. Hierfür umfasst sowohl der Talker 2 als auch der Listener 3 eine Adaptionsschicht 8, die zwischen die Applikation 5 und den TSN-Stack 6 geschaltet ist.

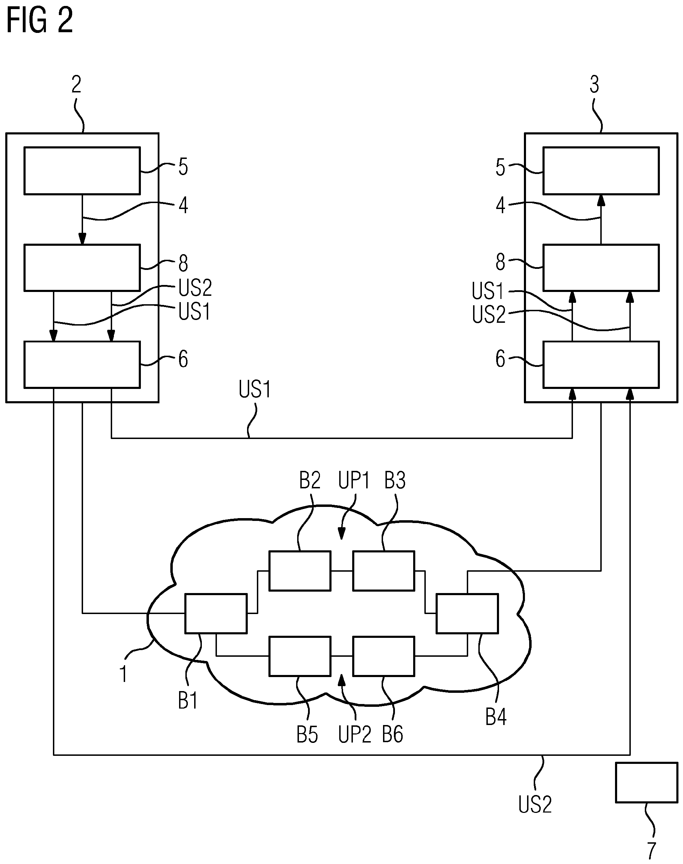

Die Aufteilung auf die Unterpfade UP1, UP2 und Unterstreams US1, US2 und die Adaptionsschichten 8 sind - rein schematisch - in FIG 2 dargestellt.

Vorliegend wird konkret eine Reservierungsanfrage für einen Stream 4, mit dem 10K pro 3 ms Netto-Daten übertragen werden sollen, gestellt und für diese kann im Netzwerk 1 kein (einzelner) den Talker 2 und Listener 3 verbindenden Pfad gefunden werden, auf dem an allen Netzwerkknoten B1-B6 10K pro 3 ms Netto-Daten reserviert werden können.

Anstelle einer Ablehnung wird überprüft, ob eine Konstellation mit zwei oder mehr Unterpfaden UP1, UP2 gefunden werden kann, die zusammengenommen die geforderte Bandbreite erfüllen. Vorliegend wird konkret ein Unterpfad U1 gefunden, welcher sich von der Bridge B1 über die Bridges B2 und B3 zur Bridge B4 erstreckt, und auf dem an allen Bridges B1-B4 7K pro 3 ms Netto-Daten reserviert werden können, und ein zweiter Unterpfad UP2, der sich von der Bridge B1 über die Bridges B5 und B6 zur Bridge B4 erstreckt, und auf dem an allen Bridges B1, B5, B6, B4 3K pro 3 ms Netto-Daten reserviert werden können, so dass beide Unterpfade UP1, UP2 zusammengenommen bzw. in Summe die Bandbreitenanforderung von 10K pro 3 ms Netto-Daten-Übertragung gemäß der Reservierungsanfrage erfüllen.

Auf den beiden Unterpfade UP1, UP2 wird dann jeweils ein Unterstream US1, US2 eingerichtet, konkret erfolgt eine Reservierung von entsprechenden Netzwerkressourcen, insbesondere entsprechenden Bandbreiten und im Anschluss kann die Übertragung von Datenframes von dem Talker 2 an den Listener 3 über die beiden Unterpfade UP1, UP2 und die beiden Unterstreams US1, US2 erfolgen.

Das "Aushandeln", wie ein applikativer Stream 4 auf mehrere Netzwerk-Streams US1, US2 verteilt werden kann, kann prinzipiell auf unterschiedlichen Wegen erfolgen. Es ist beispielsweise durch "intelligentes Probieren" möglich, wobei eine schrittweise Reduzierung der Anforderungen erfolgen kann, bis ein erster Unterpfad UP1 gefunden werden kann, und die "Restanforderung" dann, wie im vorliegenden Beispiel auf einen weitere Unterpfade UP2 fallen kann, oder alternativ auf mehr als einen weiteren Unterpfad. Das "intelligente Probieren" erfolgt bevorzugt durch die Adaptionsschicht 8 des Listener 3 und Talkers 2. Die Adaptionsschicht 8 des Talkers 2 teilt bevorzugt dem Netzwerk 1 entsprechende Unterpfade UP1, UP2 sowie Unterstreams US1, US2 mit, damit diese zur Verfügung stehen bzw. bekannt sind.

Für das vorliegende Beispiel der geforderten 10K pro 3 ms Netto-Daten und den zwei Unterpfaden UP1, UP2 wurde in einem ersten Schritt versucht, 8K pro 3ms Netto-Daten auf einem Unterpfad zu reservieren, dies wurde jedoch weiterhin vom TSN-Netzwerk 1 abgelehnt. Daraufhin wurde versucht, 7K pro 3ms Netto-Daten zu reservieren, was für den ersten Unterpfad UP1 möglich war und die entsprechende Reservierung wurde auf dem Unterpfad UP1 an den Bridges B1, B2, B3 und B4 durchgeführt.

Die Suche nach einem zweiten Unterpfad UP2 für die verbleibenden 3K pro 3 ms Netto-Daten war erfolgreich und es wurde auf UP2 an den Bridges B1, B5, B6 und B4 die "Restforderung", also jeweils 3K pro 3 ms Netto-Daten reserviert.

Im Anschluss an die erfolgreiche Reservierung auf beiden Unterpfaden UP1, UP2 Dann kann die eigentliche Datenübertragung erfolgen. Dabei wird die Adaptionsschicht 8 des Talker 2 Datenframes bzw. Pakete, die über den Stream 4, für welchen die Reservierungsanfrage von der Applikation 5 gestellt wurde, übertragen werden sollen, auf die Unterstreams US1, US2 verteilen, und die Adaptionsschicht 8 des Listeners 3 wird die auf die beiden Unterstreams US1, US2 verteilten Datenframes bzw. Pakete wieder zusammenführen, insbesondere in einem Stream. Dies ist in FIG 2 durch Pfeile schematisch angedeutet.

Die Applikationen 5 bekommen von der Aufteilung auf zwei Unterstreams US1, US2 nichts mit, die Adaptionsschicht(en) 8 verstecken dies vor den Applikationen 5. Auf Seiten der Applikationen 5 sind daher keinen Änderungen erforderlich.

Neben der Verteilung der Netto-Daten auf die Unterstreams US1, US2 stellt die Adaptionsschicht 8 des Talker 2 auch sicher, dass die applikativen QoS-Anforderungen erfüllt werden, insbesondere die maximale Latenz eingehalten wird. Dazu berücksichtigt sie neben der Latenz der Unterstreams US1, US2 auch die durch sie selbst verursachten Verzögerungen, wofür sie entsprechend ausgebildet und/oder eingerichtet ist.

Es sei angemerkt, dass alternativ zu dem vorstehend beschriebenen "intelligenten Probieren" auch vorgesehen sein kann, dass ein zentraler Netzwerkkonfigurator 7 bzw. Netzwerkkontroller und/oder ein Reservierungsprotokoll (z.B. MSRP,...) mögliche Unterstream-Kombinationen zur Erfüllung der Stream-Anforderungen gemäß der Reservierungsanfrage liefert. Diese Möglichkeit ist effizienter, da das Probieren entfällt, muss jedoch durch das Netzwerk 1 unterstützt werden. Von Unterstream-Kombinationen, die von einem zentralen Netzwerkkontroller und/oder einem Reservierungsprotokoll angeboten werden, kann dann eine Kombination ausgewählt werden und eine Reservierung für diese erfolgen.

Weiterhin sein angemerkt, dass der Talker 2 und Listener 3 mit den Adaptionsschichten 8 Ausführungsbeispiele erfindungsgemäßer Kommunikationsgeräte bilden.

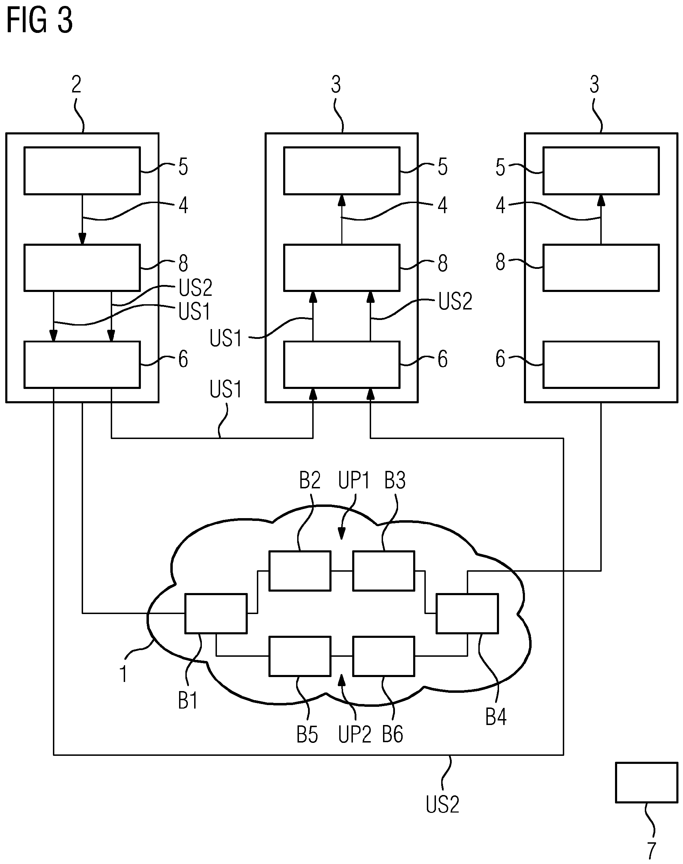

Selbstverständlich ist es möglich, dass eine Reservierungsanfrage mit einer geforderten Bandbreite für einen Stream 4 gestellt wird, über den Datenframes zwischen einem Stream-Initiator und mehreren Stream-Teilnehmern übertragen werden sollen ("Multiple Listeners per Talker"). Ein entsprechendes Szenario ist - beispielhaft für zwei Listener 3 - n FIG 3 dargestellt. Dieses unterscheidet sich von demjenigen gemäß FIG 2 allein dadurch, dass ein weiterer Listener 3 vorhanden ist, der an dem von dem Talker 2 angekündigte Stream 4 teilnehmen möchte. Dieser ist an die Bridge B2 angeschlossen.

Meldet sich dieser an dem Stream 4 an, beispielsweise, nachdem sich der erste Listener 2 angemeldet hat und für diesen, nachdem kein (einzelner) die QoS-Anforderungen erfüllender Pfad gefunden werden konnte, zwei Unterpfade UP1, UP2 gefunden und zwei Unterstreams US1, US2 eingerichtet wurden, kann es sein, dass für diesen die gleiche Problematik festgestellt wird, konkret seine Reservierungsanfrage abgelehnt wird, weil kein (einzelner) Pfad gefunden wird. Dann wird auch für diesen nach zwei oder mehr Unterpfaden UP1, UP2 gesucht, welche zusammengenommen die Bandbreite gewährleisten können. Vorliegend kann ein erster Unterpfad UP1 für diesen gefunden werden, der sich von der Bridge B1 zu der Bridge B2 erstreckt und ein zweiter Unterpfad, der sich von der Bridge B1 über die Bridges B5, B6, B4, B3 und B2 erstreckt. Dabei wurde genauso vorgegangen, wie es vorstehend im Zusammenhang mit dem ersten, an der Bridge B4 angeschlossenen Listener 3 beschrieben wurde.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

So kann beispielsweise ein Szenario vorliegen, bei dem mehrere Talker Daten über einen Stream an einen Listener senden möchten, wie in der ebenfalls auf die Anmelderin zurückgehenden europäische Patentanmeldung Nr. EP 18 15 4319 beschrieben. Auch in einem solchen Fall ist es selbstverständlich möglich, dass für den Fall, dass für einen, mehrere oder auch alle Talker kein (einzelner) Pfad mit ausreichenden Ressourcen gefunden wird, für die betroffenen Talker eine Aufteilung auf zwei oder mehr Unterpfade und Unterstreams erfolgt, wobei die Abläufe genauso sein können, wie vorstehend im Zusammenhang mit den Figuren 2 und 3 beschrieben.

## Patentansprüche

1. Verfahren zur Datenübertragung in einem insbesondere industriellen Netzwerk (1) mit mehreren Netzwerkknoten (B1-B6), bei dem eine Reservierungsanfrage mit einer geforderten Bandbreite für einen Stream (4), über den Datenframes zwischen einem Stream-Initiator (2) an einem Stream-Teilnehmer (3) übertragen werden sollen, gestellt und ein den Stream-Initiator (2) und den Stream-Teilnehmer (3) verbindender Pfad, dessen Netzwerkknoten (B1-B6) die Bandbreite gemäß der Reservierungsanfrage ermöglicht bzw. ermöglichen, gesucht wird, (B1-B6), **dadurch gekennzeichnet, dass**
für den Fall, dass kein solcher Pfad im Netzwerk (1) gefunden werden kann, wenigstens zwei Unterpfade (UP1, UP2) gesucht werden, die jeweils den Stream-Initiator (2) und den Stream-Teilnehmer (3) verbinden und die sich jeweils um wenigstens einen Netzwerkknoten (B1-B6) voneinander unterscheiden und deren Netzwerkknoten (B1-B6) jeweils eine gegenüber der geforderten Bandbreite reduzierte Bandbreite ermöglicht bzw. ermöglichen, wobei die reduzierten Bandbreiten der Unterpfade (UP1, UP2) zusammengenommen die geforderte Bandbreite ermöglichen, und auf jedem Unterpfad (UP1, UP1) ein Unterstream (US1, US2) mit der jeweiligen reduzierten Bandbreite eingerichtet wird.

2. Verfahren nach Anspruch 1,
**dadurch gekennzeichnet, dass** eine Reservierungsanfrage mit einer geforderten Bandbreite für einen Stream (4) gestellt wird, über den Datenframes zwischen einem Stream-Initiator (2) mehreren Stream-Teilnehmern (3) übertragen werden sollen, und insbesondere nacheinander für jeden Stream-Teilnehmer (3) ein den Stream-Initiator (2) und jeweiligen Stream-Teilnehmer (3) verbindender Pfad, dessen Netzwerkknoten (B1-B6) die Bandbreite gemäß der Reservierungsanfrage ermöglicht bzw. ermöglichen, gesucht wird, und für den Fall, dass für einen oder mehrere Stream-Teilnehmer (3) kein solcher Pfad im Netzwerk (1) gefunden werden kann, für den oder jeden betroffenen Stream-Teilnehmer (3) jeweils wenigstens zwei Unterpfade (UP1, UP2) gesucht werden, die den Stream-Initiator (2) und den jeweiligen Stream-Teilnehmer (3) verbinden und die sich jeweils um wenigstens einen Netzwerkknoten (B1-B6) voneinander unterscheiden und deren Netzwerkknoten (B1-B6) jeweils eine gegenüber der geforderten Bandbreite reduzierte Bandbreite ermöglicht bzw. ermöglichen, wobei die reduzierten Bandbreiten der Unterpfade (UP1, UP2) zusammengenommen die geforderte Bandbreite ermöglichen, und auf jedem Unterpfad (UP1, UP2) ein Unterstream (US1, US2) mit der jeweiligen reduzierten Bandbreite eingerichtet wird.

3. Verfahren nach Anspruch 1 oder 2,
**dadurch gekennzeichnet, dass** die Reservierungsanfrage von einer auf dem Stream-Initiator (2) und/oder einer auf dem oder den Stream-Teilnehmern (3) vorgesehenen Applikation (5) gestellt wird.

4. Verfahren nach einem der vorhergehenden Ansprüche,
**dadurch gekennzeichnet, dass** an dem oder jedem Netzwerkknoten (B1-B6) der Unterpfade (UP1, UP2) Netzwerkressourcen für die Unterstreams (US1, US2) reserviert werden.

5. Verfahren nach einem der vorhergehenden Ansprüche,
**dadurch gekennzeichnet, dass** eine zentrale Netzwerk-Konfigurations-Einheit (7) vorgesehen ist, und die Suche nach dem Pfad und/oder den Unterpfaden (UP1, UP2) von der zentrale Netzwerk-Konfigurations-Einheit (7) durchgeführt wird.

6. Verfahren nach einem der vorhergehenden Ansprüche,
**dadurch gekennzeichnet, dass** die Suche nach dem Pfad und/oder den Unterpfaden (UP1, UP2) mittels eines Reservierungsprotokolls, insbesondere MSRP und/oder MSRP++, durchgeführt wird.

7. Verfahren nach einem der vorhergehenden Ansprüche,
**dadurch gekennzeichnet, dass** für das Auffinden der wenigstens zwei Unterpfade (UP1, UP2) die geforderte Bandbreite in vorgegebenen Schritten reduziert und nach jedem Schritt ein erster Unterpfad (UP1) gesucht wird, der die resultierende reduzierte Bandbreite ermöglicht, und für den Fall, dass auf diese Weise ein erster Unterpfad (UP1) gefunden wurde, genau ein weiterer Unterpfad (UP2) gesucht wird, der die verbleibende Bandbreite, um die reduziert wurde, ermöglicht, oder mehrere weitere Unterpfade (UP2) gesucht werden, die die verbleibende Bandbreite, um die reduziert wurde, zusammengenommen ermöglichen.

8. Verfahren nach einem der vorhergehenden Ansprüche,
**dadurch gekennzeichnet, dass** der Stream (4), für den die Reservierungsanfrage gestellt wird, von dem Stream-Initiator (2) angekündigt wird, und sich der oder jeder Stream-Teilnehmer (3) in Reaktion auf die Ankündigung an dem Stream (4) anmeldet und die Suche nach einem Pfad zwischen dem Stream-Initiator (2) und dem oder dem jeweiligen Stream-Teilnehmer (3), dessen Netzwerkkonten (B1-B6) die Bandbreite gemäß der Reservierungsanfrage ermöglicht bzw. ermöglichen, jeweils im Anschluss an die Anmeldung des oder des jeweiligen Stream-Teilnehmers (3) erfolgt.

9. Verfahren nach einem der vorhergehenden Ansprüche,
**dadurch gekennzeichnet, dass** der Stream (4), für den die Reservierungsanfrage gestellt wurde, insbesondere die zugehörigen Datenframes, auf die Unterstreams (US1, US2) aufgeteilt wird.

10. Verfahren nach einem der vorhergehenden Ansprüche,
**dadurch gekennzeichnet, dass** für den Stream-Initiator (2) eine Adaptionsschicht (8), insbesondere zwischen einer Applikation (5) und einem TSN-Stack (6) des Stream-Initiators (2) vorgesehen ist, und für den oder jeden Stream-Teilnehmer (3) eine Adaptionsschicht (8), insbesondere zwischen einer Applikation (5) und einem TSN-Stack (6) des Stream-Teilnehmers (3), vorgesehen ist, und die Adaptionsschicht (8) des Stream-Initiators (2) oder des oder jeden betroffenen Stream-Teilnehmers (3) die Reservierungsanfrage für den Stream (4) auf wenigstens zwei Unter-Reservierungsanfragen für die wenigstens zwei Unterpfade (UP1, UP2) aufteilt.

11. Verfahren nach Anspruch 10,
**dadurch gekennzeichnet, dass** die Adaptionsschicht (8) des Stream-Initiators (2) Datenframes, die über den Stream (4), für welchen die Reservierungsanfrage gestellt wird, übertragen werden sollen, auf die wenigstens zwei Unterstreams (US1, US2) verteilt, und die Adaptionsschicht (8) des oder jeden betroffenen Stream-Teilnehmers (3) die auf die wenigstens zwei Unterstreams (US1, US2) verteilten Datenframes wieder zusammenführt.

12. Verfahren nach Anspruch 10,
**dadurch gekennzeichnet, dass** die Adaptionsschicht (8) des oder jeden betroffenen Stream-Teilnehmers (3) Datenframes, die über den Stream (4), für welchen die Reservierungsanfrage gestellt wird, übertragen werden sollen, auf die wenigstens zwei Unterstreams (US1, US2) verteilt, und die Adaptionsschicht (8) des Stream-Initiators (3) die auf die wenigstens zwei Unterstreams (US1, US2) verteilten Datenframes wieder zusammenführt.

13. Verfahren nach einem der Ansprüche 10 bis 12,
**dadurch gekennzeichnet, dass** eine Verzögerung, die durch das Aufteilen der Reservierungsanfrage auf mehrere Unter-Reservierungsanfragen und/oder eine Verzögerung, die durch das Aufteilen von Datenframes auf die Unterstreams (US1, US2) bedingt ist, und/oder eine Verzögerung, die durch das Zusammenführen von Datenframes aus den Unterstreams (Us1, US2) bedingt ist, bei der Einhaltung einer gemäß der Reservierungsanfrage maximalen Latenz berücksichtigt wird.

14. Verfahren nach einem der vorhergehenden Ansprüche,
**dadurch gekennzeichnet, dass** eine Verzögerung, die durch das Suchen von Unterpfaden (UP1, UP2) bedingt wird, bei der Einhaltung einer gemäß der Reservierungsanfrage maximalen Latenz berücksichtigt wird.

15. Verfahren nach einem der vorhergehenden Ansprüche,
**dadurch gekennzeichnet, dass** es sich bei dem Stream-Initiator um einen Talker (2) und bei dem oder jedem Stream-Teilnehmer um einen Listener (3) handelt, oder es sich bei dem Stream-Initiator um einen Listener (3) und bei dem oder jedem Stream-Teilnehmer um einen Talker (2) handelt.

16. Kommunikationsgerät (2, 3), das zur Durchführung des Verfahrens nach einem der vorhergehenden Ansprüche ausgebildet und/oder eingerichtet ist.

17. Kommunikationsgerät (2, 3) nach Anspruch 16,
**dadurch gekennzeichnet, dass** das Kommunikationsgerät eine Adaptionsschicht (8), insbesondere zwischen einer Applikation (5) und einem TSN-Stack (6) des Kommunikationsgerätes (2, 3), aufweist, und die Adaptionsschicht (8) ausgebildet und/oder eingerichtet ist, um die Reservierungsanfrage für den Stream (4) auf wenigstens zwei Unter-Reservierungsanfragen für die wenigstens zwei Unterpfade (UP1, UP2) aufzuteilen.

18. Kommunikationsgerät nach Anspruch 16 oder 17,
**dadurch gekennzeichnet, dass** die Adaptionsschicht (8) ausgebildet und/oder eingerichtet ist, um Datenframes, die über den Stream (4), für welchen die Reservierungsanfrage gestellt wird, übertragen werden sollen, auf die wenigstens zwei Unterstreams (US1, US2) zu verteilen, und/oder um die auf die wenigstens zwei Unterstreams (US1, US2) verteilten Datenframes wieder zusammenzuführen.

19. Computerprogramm umfassend Programmcode-Mittel zur Durchführung des Verfahrens nach einem der Ansprüche 1 bis 15.

20. Computerlesbares Medium, das Instruktionen umfasst, die, wenn sie auf wenigstens einem Computer ausgeführt werden, den wenigstens einen Computer veranlassen, die Schritte des Verfahrens nach einem der Ansprüche 1 bis 15 durchzuführen.
